Europäisches Patentamt

(19) European Patent Office

Office européen des brevets

(11) Publication number : **0 452 573 B1**

# EUROPEAN PATENT SPECIFICATION

(12)

(45) Date of publication of patent specification :
01.06.94 Bulletin 94/22

(51) Int. Cl.⁵ : **G01N 3/06,** G01B 5/30,
G01L 1/06

(21) Application number : **90304064.0**

(22) Date of filing : **17.04.90**

(54) Fatigue monitoring.

(43) Date of publication of application :
23.10.91 Bulletin 91/43

(45) Publication of the grant of the patent :
01.06.94 Bulletin 94/22

(84) Designated Contracting States :
AT BE CH DE DK ES FR GB GR IT LI LU NL SE

(56) References cited :
EP-A- 0 032 101
EP-A- 0 147 254
EP-A- 0 149 748
GB-A- 2 223 855
US-A- 3 744 300
US-A- 4 502 337

(73) Proprietor : **Prescott, Nicholas John**
**17 Gleave Avenue**
**Bollington Nr Macclesfield, Cheshire SK10**
**5LX (GB)**
Proprietor : **Burdekin, Frederick Michael**
**27 Spring Bank**
**Bollington Nr Macclesfield, Cheshire (GB)**

(72) Inventor : **Prescott, Nicholas John**
**17 Gleave Avenue**
**Bollington Nr Macclesfield, Cheshire SK10**
**5LX (GB)**
Inventor : **Burdekin, Frederick Michael**
**27 Spring Bank**
**Bollington Nr Macclesfield, Cheshire (GB)**

(74) Representative : **McNeight, David Leslie et al**
**McNeight & Lawrence**
**Regent House**
**Heaton Lane**
**Stockport Cheshire SK4 1BS (GB)**

EP 0 452 573 B1

Jouve, 18, rue Saint-Denis, 75001 PARIS

## Description

This invention relates to monitoring structures over a period of time meaningful in terms of potential fatigue or fracture failure. Structures to which the invention applies are usually those which, in use, are subjected to repeated or to cyclic loadings under which crack-like flaws may grow and lead to fatigue or fatigue-induced failure. Monitoring is intended to help maintain the integrity of structures against fatigue failure by warning of the need to scrap or replace parts of a structure, in such time as ensures no or minimal liability of failure but which nevertheless does not increase maintenance costs by premature replacement.

Fatigue occurs when crack-like imperfections present in most metallic structures grow (or initiate and grow) under the influence of repeated loading. This can be due to the presence of high magnitude local strains at, for example, a joint with a high stress concentration. Crack-like flaws introduced into a structure during manufacture can dominate its performance in fatigue, particularly where welding is used in manufacture. To minimise the risk of fatigue damage, tensile structures are carefully inspected during manufacture to locate any crack-like flaws of unacceptable size. In a large structure, or on a large production run of a mass produced component, this is a difficult process and it is impractical to eliminate all the flaws present.

The invention is applicable to a wide variety of structures including structures which are manufactured to a given specification but which might well be subjected to a wide variety of stress conditions in use. Such structures include, for example, airframes, bridges, cranes, offshore structures, machinery, fairground equipment and the like.

The useful life of components of any structure will be different, so far as fatigue failure liability is concerned, according to factors such as the operating environment and service requirements. They can be subject to occasional overstresses, such as from heavy landings or exceptional turbulence as may be experienced by airframes, which may accelerate the fatigue failure of some components.

Conventional methods and problems associated with them for dealing with fatigue failure or the likelihood of it include the following :-

. redundancy    introducing spare or redundant components or load paths which can take over when the main component fails and maintain the structure's integrity at least until the component proper can be repaired or replaced - this is referred to as "fail safe" design and is used extensively in the aerospace industry. The weakness is that regular inspection and/or instrumentation is required to detect any failed component; where the critical component is in the heart of a complex plant or at the bottom of the sea it may not be discovered for some time after it has suffered a fatigue failure.

. timely replacement
rating components for a specific service life and replacing them during routine maintenance ahead of the shortest failure time. This, however, may mean that most components are replaced long before they would fail, and this is wasteful.

. frequent inspection
hoping to detect fatigue-induced cracks in service before they cause the structure to fail. However, the size of flaw which needs to be found will generally be very small, since the latter stages of crack growth are very rapid. It is often impractical to inspect sufficiently extensively or frequently.

. instrumentation including direct measurement by strain gauges and like transducers of the loads affecting a structural component, and the use of gauges such as are promoted by Tensiodyne (see below) who propose the attachment of multiple gauges to a structure which are designed to fracture or fail under different conditions and serve as an indication of the fatigue history (and hence future) of the component under test.

All of these methods have their different disadvantages, however. Thus redundancy involves a capital cost penalty and also a weight penalty, particularly in aircraft structures. A weight penalty may in turn put more stress than necessary on other components and lead to premature fatigue failure thereof. Timely replacement clearly leads to too-early replacement in both cases, wasting engineering time and component costs, and particularly down-time.

Frequent inspection is obviously costly, and does not in any event detect the failure of a component usually until some time after it has failed. However, brief such time might be, it may be dangerous nonetheless to operate a structure with an unnoticed fatigue fracture.

Instrumentation has certain problems, mainly of cost both in terms of capital cost and monitoring and interpretation of the instruments' information. However, there are also difficulties in relating the information from instrumentation to the actual performance of structures and their components.

US 3,744,300 describes a specialist instrumentation system for measuring fatigue damage in helicopter blades based on the actual number of force cycles and on the exact amplitude of the load experienced in each cycle.

Archer, in US 4,502,337 and EP 0,147,254, describes a fatigue damage indicator comprising two thick elements attached to a mechanical member and connected each other by a thin web or plate. The thick elements are placed so that they may be displaced by any stress on the mechanical member causing a crack to appear in the thin web or plate.

Archer describes a similar system in EP 0,032,101.

In US-A-4,107,980, Crane et al, is described a method for predicting damage accumulation in a structural form in which a flawed metal strip is attached to the component. The flaw, which is produced in the strip by fatigue-stressing it, grows at a rate which is related to the growth of an assumed flaw in the component, so that damage actually accumulated can be assessed by looking at the growth of the flaw in the gauge regardless of the time factor.

Smith, in US-A-3,979,949, proposes a gauge for measuring accumulated fatigue damage and remaining fatigue life. The gauge comprises a thin rectangular metal base with a crack-like slit cut in one side and a Teflon parting strip attached to the base underlying the slit. The gauge is attached to a structure with a suitable adhesive and a fatigue crack will begin to grow at the slit when the structure is subjected to repeated loading. The crack grows approximately linearly with accumulated fatigue strains incurred by the structure.

These and other proposals for attaching gauges to structures show that it is already widely appreciated that gauges which have a crack-initiating flaw from which a crack will grow when the gauge is attached to a structure will indicate fatigue damage accumulating in the structure and can be used to monitor the structure as regards fatigue damage.

However, these prior art proposals have not been widely adopted, if indeed they have been adopted at all. One reason for this could be that while the previous proposals discuss gauges which have worked in particular situations, as a practical matter they contain no useful guidance as to how gauges should be implemented for other situations.

Smith, in US-A,3,979,949, for example, suggests monitoring fatigue damage incurred by a piece of structure in actual service by mounting a gauge "to some part of" the structure. It need not, he states, be mounted near where a fatigue failure can be expected, so long as it is placed where it will be exposed to principal loads in the structure considered primary to fatigue damage. He then teaches to locate an identical gauge identically on an identical piece of structure for laboratory testing which is then exposed to repeated loading. When the laboratory specimen fails, the amount of crack growth at the time of failure is noted. The amount of crack growth in the gauge attached to the structure in actual service is periodically noted. This is said to be linearly related to the fraction of fatigue life expended in the structure itself, although no very good reason is advanced for this.

In the first place, of course, the need to carry out the laboratory evaluation of gauge behaviour is a major deterrent to the adoption of the technique. Secondly, little guidance is given about the design or selection of gauges for particular situations.

Crane et al in US-A-4,107,980 note that previous attempts to develop a precedure or device for monitoring damage accumulation have been unsuccessful because the methods and/or instruments developed were incapable of measuring parameters which could be directly related to the complex processes which influence the growth of a flaw or crack. Their proposed method differs in that they provide a flaw or crack of critical length in a fatigued metal gauge. The gauge flaw, in fact, should, according to their teaching, have an initial length greater than the length of any actual or assumed flaw in the component being monitored.

The reference to an "assumed" flaw is with regard to MIL SPEC-A 83444 of the US Air Force, which requires the establishment of an assumed flaw size in all fracture critical components.

Crane et al, despite discussing fracture theory in some degree of mathematical detail, however, offer little guidance on the practical approach to gauge design, except that the initial flaw length should be greater than the initial component flaw, actual or assumed.

Moreover, neither of these prior art references mentions prestressing. Structural details are usually, in service, under some degree of static loading on which cyclic or repeated stress variation is superimposed. The static loading when the detail is out of service, as it usually will be when a gauge is fitted, will usually be very different from the static loading in service. A gauge, for example, would be fitted to a wing spar detail when the aeroplane is on the ground, not when it is in the air, and the static loadings in these two cases will be in opposite directions. Depending on how the gauge was fitted, the in-flight static loading could act so as to tend to close up any developing crack in the gauge and this would mask the true effect by cyclic wing loadings due to manoeuvuring, turbulence and so on, which is an unsatisfactory state of affairs.

In European Patent Publication No. 0 149 748 (Tensiodyne) is described a device and method for monitoring fatigue life of a structural member, the device comprising at least one and preferably a plurality of substantially flat, elongated coupons which are fabricated of the same material (preferably) as the member being monitored. The coupons are secured to the member so as to experience the same strain history as the member.

Each of the coupons had a different stress concentrating notch pattern, so that the application of the same strain to all of the coupons secured in parallel to the member results in the development of different stress concentrations within them, which causes each coupon to have a different fatigue life, which is a predetermined percentage of the fatigue life of the member being monitored.

The coupons each have a notch pattern consisting of a pair of notches being disposed one on each of the long sides of the coupon. The notches have different geometries producing stress fields varying in intensity from relatively mild to very severe. The coupon with the very severe notch pattern will fail first, that with the mild pattern last, the failure of each coupon in turn giving an indication of the percentage of life to failure experienced by the member. The different behaviour of different coupons is controlled by the initiation and early crack growth of cracks in the stress concentration region and this is now found to be highly variable.

If graded coupons are used, as evidently primarily contemplated in European Publication No. 0 149 748, then the expense of making and locating the coupons is increased. In any event, it will be impossible for all of the coupons to be located so as to monitor the same location on the member to be monitored and consequently to be sure that they all accurately reflect the same stress history. Mounting the coupons will usually involve interfering to some extent with the integrity of the structure and the more that have to be mounted in the same locality, the more the integrity will be compromised.

The present invention provides methods and apparatus which facilitate fatigue monitoring in structures without the disadvantages, to a greater or lesser extent, aforesaid.

The invention provides a method for monitoring fatigue in a structural detail subject to fatigue-producing stresses of which each stress range $S_i$ occurs $n_i$ times over the service history of the detail, characterised in that the method comprises monitoring a gauge crack subject to a similar service history as the detail, the crack being initiated in a gauge selected by selecting a base design life of the detail in the form

$$\sum_{max} c_i S_i^m n_i$$

according to design criteria appropriate to the detail; selecting a gauge factor function establishing how the gauge crack will grow under the stresses, matching threshold behaviour in the gauge to fatigue limit in the structure, and establishing a gauge design that will have this gauge factor function;

selecting gauge material and other parameters with which to implement the gauge so that the crack will be contained within the gauge at least for the

$$\sum_{max} c_i S_i^m n_i;$$

and selecting a degree of prestress required in deploying the gauge to the detail so that the gauge crack growth corresponds to

$$\sum_{max} c_i S_i^m n_i,$$

and deploying the gauge to the detail with this amount of prestress.

By "a crack being initiated" is meant defining a crack starting point in some way, whether by making a small saw cut or by drilling a hole or by any other such operation. It may be that cracking per se does not actually occur until the gauge undergoes stress.

By "structural detail" is meant a component such as a strut or web, or a part of a component where there might be a stress concentration, such as a window opening, or a welded or other joint. For many such details, rules have been established for selecting the base design life in the form

$$\sum_{max} c_i S_i^m n_i.$$

The $c_i$ may all be selected to be equal, or they may be factors which represent the relative effects on design life of different stress ranges. The $c_i$ may, in particular, be selected according to a modified Palmgren- Miner linear damage summation law

$$\Sigma \frac{c_i n_i}{c_o N_i} = 1$$

where $c_o$ is the constant amplitude "Paris Law" coefficient and the $N_i$ are the maximum numbers of sustainable cycles for the stress levels $S_i$.

Reference may be made, for welded joints, to the Rules set forth in The Welding Institute Research Bulletin, May 1976, page 117 ff., where joints are classified into nine classes, A, B, C, D, E, F, F2, G and W.

The gauge crack may be in an appendage to the detail, which may be in the form of a tab-like gauge. The appendage may have spaced-apart attachment points and the gauge crack initiated relatively to said points so that relative displacement of the points applies loadings at the location of the initiated crack causing the crack to grow therefrom. The appendage may be so designed that the length of crack indicates cumulative fatigue damage to the detail and the proportion of design fatigue life

$$\sum_{max} c_i S_i^m n_i$$

used up.

The crack and any hole or slot which may, in some cases, be provided to limit the growth of any crack which might develop may be provided in an appendage, which may comprise a tab-like gauge, to the structure manufactured and shaped to give crack growth characteristics comparable with those of the positions of the structure to be monitored.

The initiated crack may be provided in the structure to be monitored along with a hole or slot to limit the growth of any crack which might develop.

The appendage or, as the case might be, the structure may have an indicated position or indicated positions corresponding to different stages of crack growth; such position or positions may be marked with a visible line or other mark or may comprise a position or positions at which sensor means give a predetermined output representative of said information relating to the fatigue induced loading.

More than one initiated crack may be provided, giving multiple positions at which cracks may grow. An appendage may for example have an internal slot with a crack at each end, providing two positions from which cracks may propagate.

A tab-like gauge may have a bridge-like form and be attached to the structure at spaced-apart attachment points, which may have the initiated crack located between them. Such appendage may be of plate or foil material lying parallel to or projecting perpendicularly from or inclined to the attachment surface.

A tab-like gauge or other appendage may be attached to an intermediate member which can in turn be attached to the structure being monitored; this avoids the need to attach the appendage directly to the structure being monitored, which may be inconvenient or which may itself (as with welding) prejudice the integrity of the structure.

The appendage may be attached to the intermediate member or the element in such a manner that the areas of contact are fully bonded or bonded at discrete positions only and an intermediate member can be attached to the element similarly.

In the case where an appendage is to monitor a structural element which during its operational life is differently stressed e.g. by tension or compression, or by torsion, than when it is available to have the appendage fitted, it may be arranged to follow a similar stress pattern, which is to say that if the element to be monitored is for example under tension for attachment but goes into compression during operation (as, for example, some wing spar elements in airframes, or helicopter blades), then the appendage can be likewise under tension for attachment and under compression during operation.

Attachment of an appendage, or of an intermediate element, to a structure may be by welding or float gluing or by rivetting, pinning or bolting, for example.

Crack growth will only occur under certain types of applied strain and in particular under the so-called crack-opening or tension modes. Accordingly, where this particular mode of crack growth is to be used or alternatively where shear crack propagation or growth is to be used it may be desired to pre-stress the gauge such that the cyclic stresses occurring at the crack tip under applied working load lie in the range most suited to the design of the gauges.

The invention also includes structures modified so as be capable of being monitored by the methods aforesaid.

The comparability of the crack growth characteristics between the initiated crack and the hole or slot with those of the structure may be established by methods including, but not restricted to, the application of fracture mechanics to fatigue and fracture behaviour and numerical stress analysis methods such as finite element analysis applied to the design of the gauge or structural components.

The appendage may be in the form of a plate of structurally compatible material to the monitored structural element. For instance, the appendage may be a steel plate attached to steel structural elements.

A tab-like gauge may however be made of a material selected so that crack growth does not occur under low magnitude structure loadings, so that crack growth indicates that the structure has sustained loadings in excess of a predetermined level.

Using a comparable configuration it is possible to reduce the sensitivity of the attachment to lower magnitude loadings to a point where the appendage is no longer designed to monitor fatigue but is designed to monitor the occurrence of a single very high-magnitude loading, and noting that in this instance fracture rather than crack growth would be the means whereby crack extension took place.

An intermediate member by which the appendage is attached indirectly to a structure may be of the same material as the structure member being monitored, or may be of a different material. For example, a plastic material may be attached to a metal element it is desired to monitor, a tab-like gauge being attached to the plastic intermediate. This may be a useful expedient to support a delicate tab-like gauge which may for example be made of thin foil. It may enable such a gauge to be glued or bonded more easily to the monitored structure.

It is envisaged that the invention will be particularly useful when applied in marine offshore structures, in ships or other floating structures, in structures used in the aerospace industry, in structures produced by civil or process engineering projects, such as bridge structures, both permanent and temporary, in lattice towers and other such wind senstive structures, and in cranes and ground or track running vehicles or any such structural equipment.

A number of embodiments of the present invention will now be described, by way of example only, with reference to the accompanying drawings.

Of the drawings:-

Figure 1       is a side elevation of a first embodiment of an appendage;

Figure 2       is a cross-section of the first embodiment on the line II-II of Figure 1;

Figure 3       is a side elevation of a second embodiment;

Figure 4       is a side elevation of a third embodiment;

Figure 5       is a side view of a fourth embodiment;

Figure 6       is a view of a fifth embodiment;

Figure 7       is a view of a sixth embodiment;

Figure 8       is a view of a seventh embodiment;

Figure 9       is a view of a eighth embodiment;

Figure 10      is a view of another embodiment.

Figure 11      is a plan view of another embodiment of a tab-like gauge in position on a structure to be monitored;

Figure 12      is a view in the direction of arrow II of Figure 11;

Figure 13      is a plan view like Figure 11 of another embodiment of gauge;

Figure 14      is a plan view of another such embodiment;

Figure 15      is a plan view of another such embodiment;

Figure 16      is a plan view of another such embodiment;

Figure 17      is a plan view of another such embodiment;

Figure 18      is a diagrammatic illustration of a complex structure including a plurality of tab-like gauges and inspection and comparison means for inspection and monitoring the growth of cracks in the gauges;

Figure 19      is an elevation of an integral gauge;

Figure 20      is a plan view of a gauge with a prestressing arrangement;

Figure 21      is a plan view of another gauge with a prestressing arrangement;

Figure 22      is a graphical representation of S-n curves for various types of welded detail; and

Figure 23      is a graphical representation of gauge factors for the gauges of the invention for the same welded details.

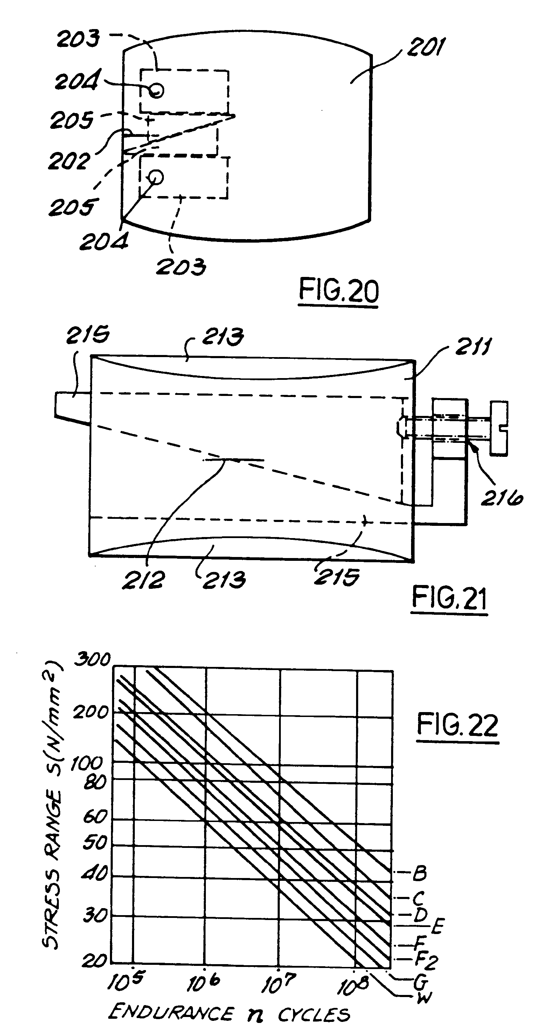

Figure 22 shows graphically the relationship between stress range S (usually expressed in $N/mm^2$) and endurance n (cycles) for various classifications of welded detail as specified by The Welding Institute in the publication referred to above.

These curves are for mean endurance - in practice, designers adopt mean minus one standard deviation (mean - 1SD) or mean - 2SD curves, for which the values of n for corresponding stress ranges are, naturally, lower, according to the criticality of the conditions. Mean - 1SD corresponds to a probability of failure of approximately 15.9%, mean - 2SD to a probability of about 2.3%. The latter is usually adopted, but in non-critical conditions, e.g. where inspection is easy, mean - 1SD is sometimes used.

It is in any event from graphs such as those in Figure 22 that designers specify a

$$\sum_{max} c_i S_i^m n_i.$$

For example, for a class W welded joint, using design values representing a lower bound mean - 2SD,

$$\sum_{max} c_i S_i^m n_i = 1.575 \times 10^{11}.$$

Such figure is obtained, for details subjected to a single stress range, by multiplying the stress range value raised to the mth power (m also being selected from established design parameters for the detail, e.g. for W-type details, m = 3) by the life in cycles. For a spectrum of stress ranges, the computation is essentially the same, but more complicated, but well understood by design engineers.

The $c_i$ are evaluated by test, and analysis of test results, according to any of a variety of standard techniques, for example by applying a so-called "Falstaff" stress spectrum, as is used in the design of military airframes.

This, then, is the first step in the monitoring method according to the invention.

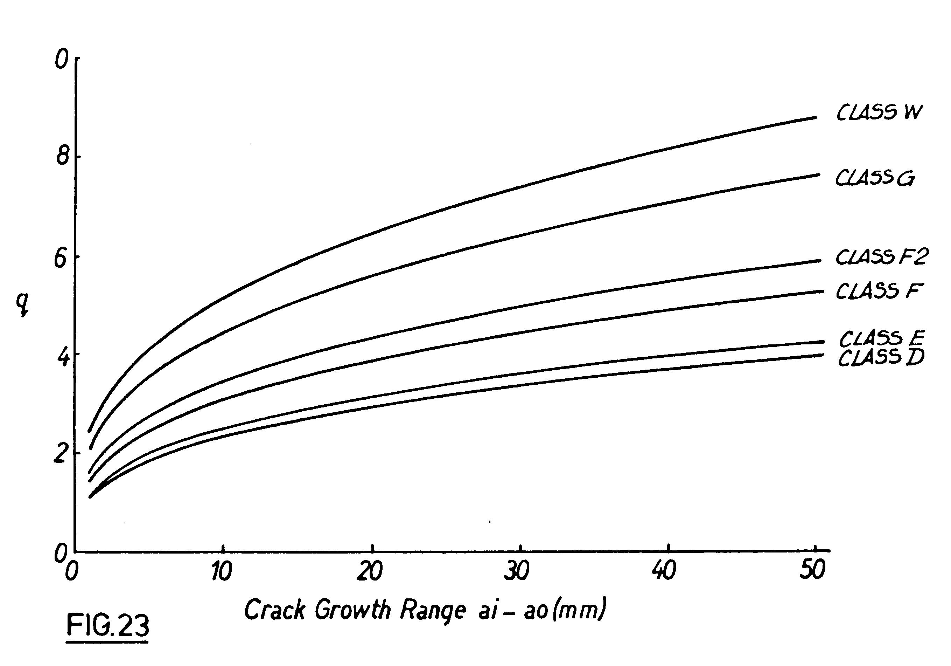

The next step is to select a gauge factor function. One such function is graphed, for different classes of welded detail, in Figure 23. Here, the function 9 is defined as

$$q = \left\{ (a_1 - a_0)/c \sum c_i S_i^m n_i \right\}^{1/m}$$

where $a_0$ is the initial crack length and $a_1$ is the crack length after $n_i$ cycles and c is a constant.

One can now select a maximum crack growth, which is essentially limited by the size of gauge one can fit into the structure, but which may well be less than the maximum possible while still giving a gauge crack which can be visually inspected easily or which is suitable for electrical resistance measurement.

Having selected the maximum crack growth, one can select the gauge factor parameters and material in which to implement the gauge to yield this maximum crack growth $(a_1 - a_0)_{max}$ to correspond to the

$$\sum_{max} c_i S_i^m S_i$$

selected for the detail being monitored.

A final step, however, is to deploy the gauge to the detail with a degree of prestress corresponding to that experienced by the detail in use. If this is not done, then the gauge, while experiencing the same number of stress cycles as the detail being monitored, will experience a different stress range or a different spectrum of stress ranges.

For example, if a gauge is attached to the upper surface of a wing spar when the airplane is on the ground, the upper surface of the spar will be in tension. In service, however, the upper surface will be in compression. A gauge implemented and deployed without regard to this may well not experience any forces tending to open up the crack. This will give a completely false picture of the fatigue history of the wing spar. If, on the other hand, the gauge is pre-stressed on deployment to the spar, it will be possible to arrange that it experiences the same applied stress range as the spar and will give a good indication of fatigue history.

Various gauge configurations will now be described with regard to the other drawings. The shape of the gauge is one of the factors determining the gauge factor function q.

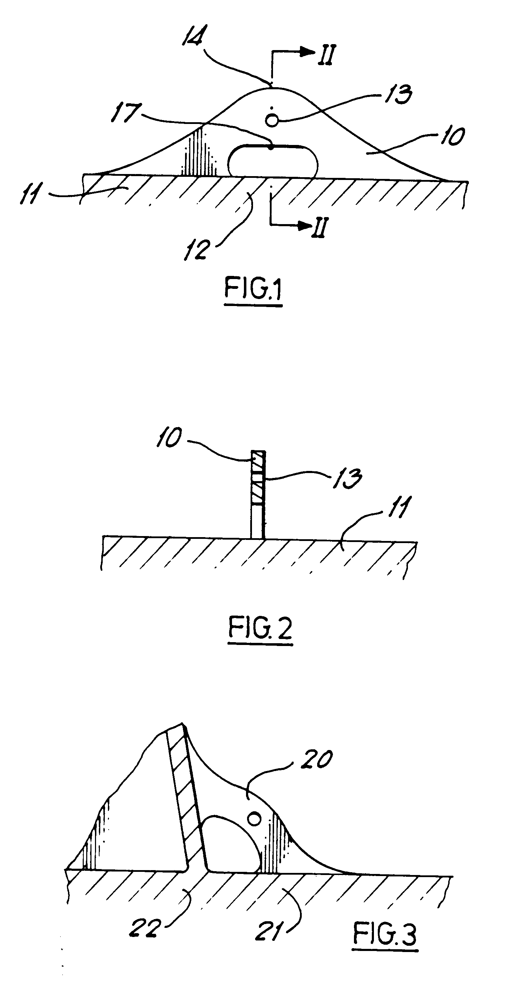

Referring firstly to Figures 1 and 2, it will be seen that an appendage 10 is attached to a structure 11 which is locally straight or near straight and which is being monitored by the appendage local to point 12. An initiated crack is positioned adjacent to hole 13 at either of points 14 and 17, depending on the conditions pertaining locally to the monitored position in the structure. The position of the hole 13 relative to the free edge of the appendage will vary from appendage to appendage depending on the conditions pertaining locally at the monitored position in the structure.

During allowable structural behaviour, the appendage 10 will crack either from an initiated crack positioned at point 14 or positioned at point 17 towards the hole 13. However, when the structure at position 12 is subject to incipient fatigue or fracture failure, the appendage may crack at a point not on the allowable crack line.

Referring now to Figure 3, a second appendage 20 is shown attached to a structure 21 being monitored locally to point 22. In this case, the structure is being monitored locally to a joint or other abrupt change of direction. The initiated crack may be positioned at any point similar to points 14 to 17 of Figures 1 and 2.

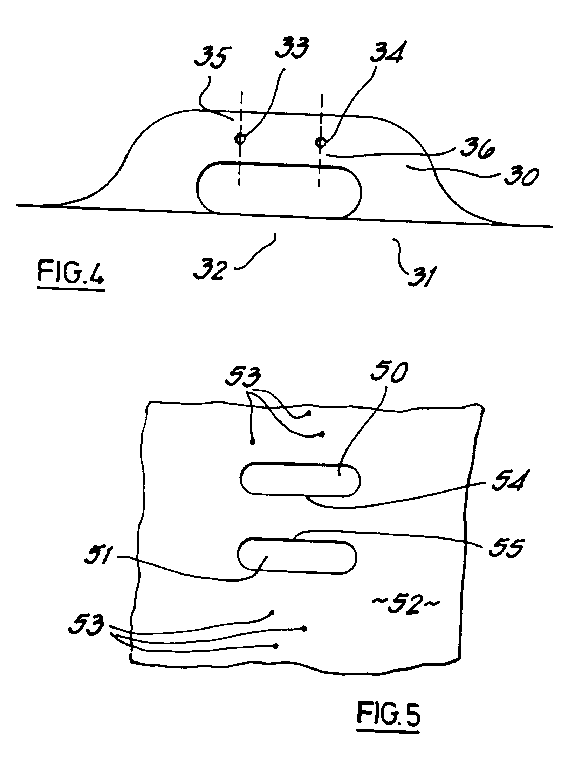

Referring now to Figure 4, a third appendage 30 is shown attached to a structure 31 being monitored locally to point 32. In this case the appendage 30 has two holes 33 and 34 such that the appendage can crack along the lines 35 or 36 in a manner similar to that described for the appendage shown in Figure 1, the details being in all other respects similar to those shown in Figures 1 to 3.

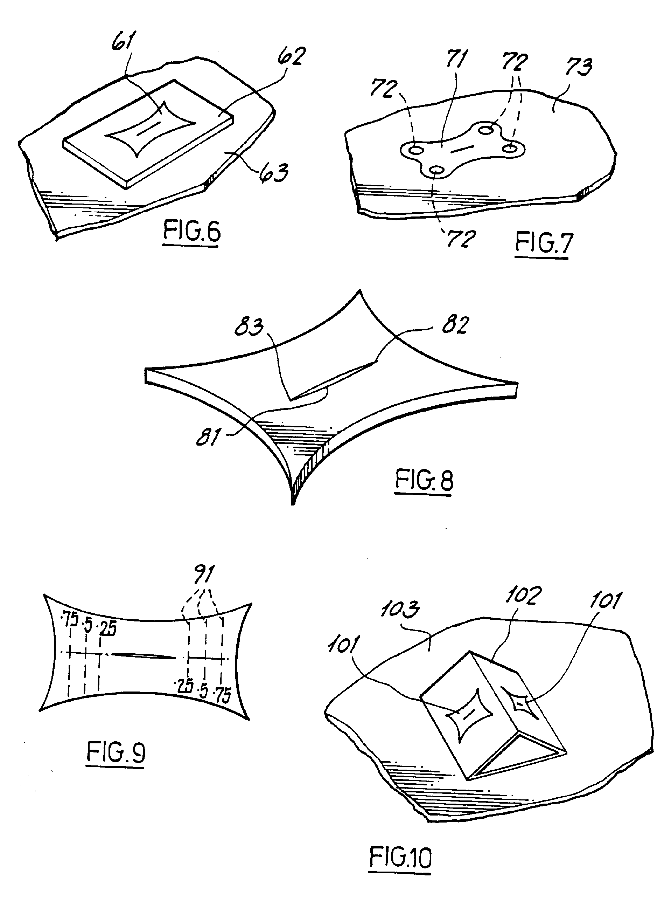

Referring now to Figure 5, a pair of slots 50 and 51 are shown in a structure 52 being monitored locally to points 53. In this case cracking can occur between the two slots in a manner similar to that described for the appendage shown in Figure 1, with an initiated crack or a number of such cracks being provided at or adjacent to 54 or 55 and the details being in all other respects similar to those shown in Figures 1 to 4. It should be noted that in this case the gauge is an integral part of the component being monitored.

Figure 6 illustrates an arrangement in which a thin plate or foil gauge 61 is attached to an intermediate member 62 which is in turn attached to the structural element 63 to be monitored. The gauge 61 comprises a tab-like appendage attached as by adhesive or by welding to the intermediate member 62. The foil may be of steel or aluminium or any other material selected according to its characteristics. It is attached peripherally to the intermediate member 62 which may comprise a pad of steel sheet or plate material and which may be glued to the structural member 63.

Figure 7 illustrates a gauge 71 like that of Figure 6 which is connected at discrete locations as indicated by spot welds 72 to an intermediate member or structural element 73.

Figure 6 and 7 illustrate arrangements shown to a larger scale in Figure 8 in which a centrally-located initiated crack 81 serves to provide two initial crack tips 82,83 from which cracks can grow. The peripheral shape of the gauge is selected as required for a particular gauge factor function.

Figure 9 illustrates a gauge or appendage like the ones illustrated in Figure 6 to 8, which also has markings 91 which, as shown, are in terms of percentage of fatigue life of the structure to be monitored which will have expired. Growth of cracks from the initiated crack in either or both directions to one or other of the markings 91 indicates that such portion of the estimated fatigue life as is indicated thereon has already expired. The markings need not be, as illustrated, in terms of percentage of fatigue life expired - for example, a normal fatigue life equivalent may be quoted as, say, five years, and the markings may be in years of elapsed life.

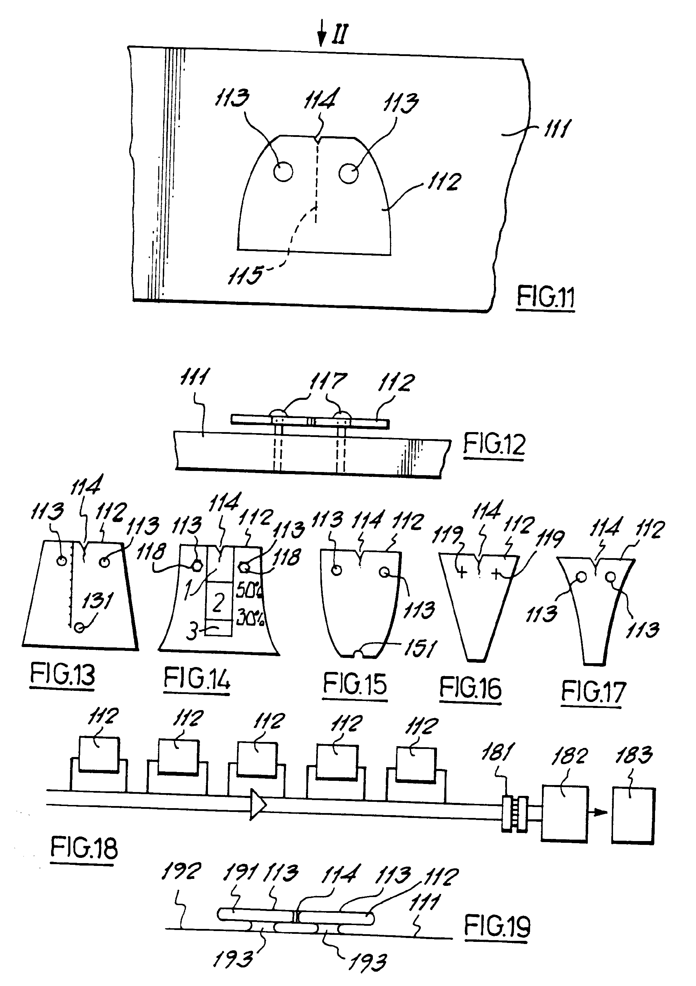

Figure 10 illustrates gauges 101 like those shown in Figure 6 to 9 attached to an intermediate member in the form of a wedge-shaped attachment 102 to a structural element 103. This figure illustrates how appendages can be attached to monitor stresses in particular directions to give particularly detailed information from which fatigue performance may be monitored.

Figures 11 to 19 illustrate further apparatus and methods for monitoring structures 111 sustaining repeated or cyclic loadings in which structural crack-like flaws may grow under the loadings and lead to fatigue or fatigue induced failure. A tab-like gauge 112 is provided to the structure 111 having spaced apart attachment points 113 by which it is joined to the structure 111. An initiated crack 114 is positioned relatively to the said attachment points so that displacement of one of said points 113 relative to the other - as will be experienced in stressing of the structure 111 - at the location of the crack 114 causes a crack to form there and grow therefrom, as indicated by the broken line 115.

The crack may grow so as eventually to separate the gauge into two parts, or its growth may be terminated by a hole 131 drilled through the gauge in the path of the crack which will terminate crack propagation as shown in Figure 13.

Figures 11 to 16 illustrate gauges 112 adapted for attachment to the structure 111 as by having bores for pins 117 or bolts 118. Otherwise, locations 119 (Figure 16) can be marked on the gauge 112 for spot welding to a structure. It will usually be important that the gauge is located on the structure by attachment points corresponding to those for which the performance of the gauge under repeated or cyclic loading is known, hence the desirability of marking or otherwise defining positions for spot welding.

In general, the attachment points 113 (and this applies also to integral versions as illustrated in Figure 19 and further referred to below) are located sufficiently close to the initiated crack 114 which is positioned essentially between the points 113 so that relative displacement of the points will cause the cracks to grow. The gauges illustrated are all shaped symmetrically about a line through said crack 114 and indeed about the line bisecting the line between the attachment points 113.

The tab-like gauges afford a crack propagation path that passes between the attachment points and extends for some distance beyond the edge on the side of the attachment points remote from the initiated crack being much further away than the edge containing the crack. The shapes of the gauges are chosen, in accordance with known teachings of fracture mechanics as may be applied to fatigue and fracture behaviour, so as to give a required variation of stress intensity factor with crack growth in the gauge, so that any required gauge fatigue life can be predetermined (having regard also to the material from which the gauge is made). The gauges illustrated taper outwardly or inwardly away from the edge with the initiated crack 114 and have straight or gently curved edges and may have no stress-concentrating feature other than the initiated crack 114. However, as illustrated in Figure 13, a crack attractor 131 can be provided in the form of a hole or slot and which may even be at an edge of the gauge as shown at 151 in Figure 15. The function of this crack attractor is, however, in no way similar to the function of the double stress concentrating notch pattern of the European publication aforementioned, the principal stress concentration in the present gauge being provided primarily by the initiated crack.

The loadings to which the structure 111 is subjected will be reflected in the loadings to which the gauge 112 is subjected and under these loadings a crack will develop in the gauge 112 and grow. The structure 111 can therefore be monitored by inspection of the gauge 112 to see how far the crack has propagated.

Such inspection may be made visually. The crack may be measured as by a ruler. Or the gauge 112 - as shown in Figure 13, for example, may have a length scale marked on it or, as shown in Figure 14, may be graduated in terms of percentage of fatigue life. The gauge shown in Figure 14 is further characterised by having marked on it three distinctly coloured fatigue life zones - Zone 1 is coloured green and extends to half the gauge fatigue life, Zone 2 is coloured amber and extends to 80% of fatigue life and may be associated with an instruction to inspect at more frequent intervals, while the third zone is coloured red and indicates the need for immediate replacement. Of course, other colours, zone extents and associated instructions can be used according to circumstances.

A good indication of the crack propagation which has occurred can be given by measurement of the electrical resistance of the gauge or by magnetic or acoustic sensing of the gauge. In a complex structure with multiple gauges, especially where some are not readily accessible, the gauges 112 can all be wired up as illustrated in Figure 8 to a common sensing point 181 for connection of automatic monitoring means that can scan the gauges 112 and measure their resistances, and compare the measured resistances against predetermined values. In one suggested arrangement, illustrated in Figure 18, a data capture device 182 is connected at routine inspection intervals to the sensing point 81 and arranged to read and store the electrical resistances of all the gauges 112 in a predetermined sequence. The stored data is then transferred to a remote processor 183 which compares the data against reference data appropriate to the structure concerned and evaluates the percentage of fatigue life which has expired for the structure components monitored by the gauges 112 so as to enable replacement decisions to be made.

Other crack sensing techniques, for example optical fibres positioned across the crack growth path and fixed to the gauge so that they snap when the crack reaches them can be used to indicate crack growth by monitoring for example the integrity of the individual fibres or by monitoring the amount of light transmission which is progressively diminished as fibres of a bundle progressively snap.

Whereas the gauges 112 illustrated in Figures 11 to 17 are fabricated separately, for attachment to structures, it is possible to fashion gauges integrally with a structure. Where this is possible, it may be preferred for a number of reasons. One reason is that the gauge material would be the same as the structure material and so there will be no mis-match of fatigue properties. Another is that there will be no interference with the integrity of the structure by attachment of the gauge, while at the same time there will be no possibility of the gauge being incorrectly attached as, for example, not being bolted firmly enough, or of its working loose in service, or of the wrong gauge being fitted.

Such an integral gauge is illustrated in Figure 19 and comprises a tab-like part 191 with a initiated crack 194 attached to a structure 192 by legs 193, the whole being moulded in this form or otherwise fashioned as by spark erosion or other machinery techniques.

Any or all of the features described in relation to the tab-like gauge as shown in Figures 11 to 19 can apply equally to the gauges shown in the other Figures where appropriate.

It will be appreciated that fatigue failure and crack propagation are not capable of being precisely predicted and that there will be an element of scatter in the fatigue failure times of structures being monitored as well as in the rates of crack propagation in the gauges. By appropriate quality management techniques in gauge manufacture to control the product form and analytic design by recourse to reliability methods as necessary, however, the propagation rate scatter can be kept to a minimum so that the mean gauge performance can be matched as closely as possible to the mean structure performance. The various appendages or tab-like gauges may be made of like material to the structural element being monitored or of different material, as may any intermediate member. The choice of material will be in accordance with fracture mechanics principles as applied to the circumstances of the various embodiments of the invention to give the fatigue crack growth and fracture behaviour required for the particular design in question.

So far as concerns choice of materials it may be arranged that a material is chosen, for example, which is less liable to fatigue failure than the material of the structural element being monitored under repeated light loading, but which will rapidly crack through under heavier loadings, so that the gauge will be an indicator only of heavier loadings. "Failure" of such a gauge may be taken to indicate that a fatigue-susceptible structure has been subjected to unusually heavy loading and may be considered unsafe to continue for the rest of its normal life, and ripe for early replacement.

The embodiments shown may be manufactured using laser cutting techniques which are particularly suitable for the cutting of the initiated cracks. However, a preferred method for making the initiated crack is actually to fatigue the tab-like gauge by repeated e.g. cyclic loading. The gauge may be gripped in a pair of jaws or otherwise held such that it may be subjected to a periodic loading pattern so as to fatigue the gauge until a crack of, say, one or two millimetres is induced at the required position or positions, typically determined by an initial small cut or slot.

The embodiments shown may incorporate alternating current potential drop crack detection equipment or any other instrumentation system to detect a crack and optionally to measure the extent of cracking between the initiated crack and the hole or slot.

As remarked above, it is important that the gauge (whether attached or integral) by appropriately pre-stressed. The degree of prestressing has to be established having regard to the state of the detail when the gauge is deployed. It is to be noted here that even when a gauge is formed integrally, as described with reference to Figure 5, it may not necessarily be formed with the correct level of pre-stress because inter alia of formulation stresses.

For attached gauges, Figures 20 and 21 illustrate methods for pre-stressing.

Figure 20 illustrates a tab-like gauge 201 having an initiated crack 202. The gauge 201 is mounted on blocks 203 being attached thereto by pins 204. The blocks 203 are to be glued to a detail to be monitored. Prior to such attachment, however, the blocks 203 are urged apart a predetermined amount by means of tapered wedge elements 205.

Figure 21 illustrates another gauge, this time a foil gauge 211 glued to mounting blocks 213 either side of an initiated crack 212. Tapered wedges 215 again urge the blocks 213 apart.

The wedges may be adjusted relatively to one another, in each case, by a screw arrangement 216 such as is shown in Figure 21 or in any other convenient manner.

Another method of prestressing is perhaps more appropriate to integral gauges such as described with reference to Figure 5, in which, by virtue of the integral construction, it is not so easy to adjust the prestressing level by a simple mechanical adjustment. In this other method, stress-inducing or stress-relieving techniques are applied to the body of the gauge as by local heating.

The level of prestressing required may have to be found, in each individual case, experimentally, although, once established, can be implemented by mechanical means such as are described with reference to Figure 20 and 21 or their mechanical equivalents.

The embodiments shown may incorporate additional structural features, included to accommodate particular requirements of a monitored position, such as additional welds and/or holes and/or stress concentrating flaws. The appendage or the slots or the holes may be of more complex shape than those shown in the drawings which are merely illustrative of the principles of the invention.

## Claims

1. A method for monitoring fatigue in a structural detail (11) subject to fatigue-producing stresses of which each stress range $S_i$ occurs $n_i$ times over the service history of the detail, characterised in that the method comprises monitoring a gauge crack subject to a similar service history as the detail (11), the crack (at 14 or 17) being initiated in a gauge (10) selected by

selecting a base design life of the detail in the form

$$\underset{max}{\Sigma} c_i S_i^m n_i$$

according to design criteria appropriate to the detail and where the $c_i$ are factors representative of the relative effects on design life of different stress gauges;

selecting a gauge factor function establishing how the gauge crack will grow under the stresses, matching threshold behaviour in the gauge to fatigue limit in the structure, and establishing a gauge design that will have this gauge factor function;

selecting gauge material and other parameters with which to implement the gauge so that the crack will be contained within the gauge at least for the

$$\sum_{max} c_i S_i^m n_i;$$

and

selecting a degree of prestress required in deploying the gauge to the detail so that the gauge crack growth corresponds to

$$\sum_{max} c_i S_i^m n_i,$$

and deploying the gauge to the detail with this amount of prestress.

2. A method according to claim 1, in which the $c_i$ are all equal.

3. A method according to claim 2, in which the $c_i$ are factors which represent the relative effects on design life of different stress ranges.

4. A method according to claim 3, in which the $c_i$ are selected according a modified Palmgren-Miner linear damage summation law

$$\Sigma \frac{c_i n_i}{c_o N_i} = 1$$

where $c_o$ is the constant amplitude "Paris Law" coefficient and the $N_i$ are the maximum numbers of sustainable cycles for the stress levels $S_i$.

5. A method according to any one of claims 1 to 4, in which the gauge crack is in an appendage to the detail.

6. A method according to claim 5, in which the appendage is in the form of a tab-like gauge.

7. A method according to claim 5 or claim 6, in which the appendage has spaced-apart attachment points and the gauge crack is initiated relatively to said points so that relative displacement of said points applies loadings at the location of the initiated crack causing the crack to grow therefrom.

8. A method according to any one of claims 5 to 7, in which the gauge factor function is selected by selecting how the appendage is shaped so as to provide a predetermined controlled relationship between the stress intensity factor at the crack in the appendage and the applied stressing in the detail to which the appendage is attached.

9. A method according to any one of claims 5 to 8, in which the appendage is so designed that the length of crack indicates cumulative fatigue damage to the detail and the proportion of design fatigue life used up.

10. A method according to any one of claims 1 to 4, in which the gauge crack is provided integrally in a detail of the structure to be monitored.

11. A method according to claim 10, in which the element is provided with a crack-arresting hole or slot to limit the growth of the crack and safeguard the said detail against fatigue failure.

12. A method according to any one of claims 1 to 11, in which a crack attractor such as a hole or slot is provided towards which the crack grows from the initiated crack.

13. A method according to any one of claims 1 to 12, in which the growth of the crack is inspected at intervals during the service life of the structure.

14. A method according to claim 13, in which the inspection is visual.

15. A method according to any one of claims 1 to 14, in which the growth of the crack is monitored continuously during the service life of the structure.

16. A method according to claim 15, in which the monitoring is carried out electrically, magnetically or acoustically.

17. A method according to claim 16, in which the electrical resistance across the crack region is monitored.

18. Apparatus monitoring fatigue in a structural detail (11) subject to fatigue-producing stresses of which each stress range $S_i$ occurs $n_i$ times over the service history of the detail, comprising a gauge (10) characterised in that the gauge (10) has an initiated crack (at 14 or 17), the detail having a selected base design life in the form

$$\sum_{max} c_i S_i^m n_i,$$

the gauge (10) having a gauge factor function and being of a material and having selected parameters so that the crack will grow under the stresses and be contained within the gauge at least for the

$$\sum_{max} c_i S_i^m n_i$$

and having a selected degree of prestress so that the gauge crack growth corresponds to

$$\sum_{max} c_i S_i^m n_i$$

19. Apparatus according to claim 18, in which the $c_i$ are all equal.

20. Apparatus according to claim 18, in which the $c_i$ are factors which represent the relative effects on design life of different stress ranges.

21. Apparatus according to claim 20, in which the $c_i$ are selected according to a modified Palmgren-Miner linear damage summation law

$$\Sigma \frac{c_i n_i}{c_o N_i} = 1$$

where $c_o$ is the constant amplitude "Paris Law" coefficient and the $N_i$ are the maximum numbers of sustainable cycles for the stress levels $S_i$.

22. Apparatus according to any one of claims 18 to 21, in which the gauge (10) factor function is determined by the gauge being shaped to provide a controlled relationship between the stress intensity factor at the crack in the gauge (10) and the applied stressing in the structure to which the gauge (10) is attached.

23. Apparatus according to claim 22, having spaced apart attachment points attached to said detail.

24. Apparatus according to claim 23, in which the gauge is shaped to provide a predetermined controlled rate of crack growth along its path between the attachment points.

25. Apparatus according to claim 24, in which the said initiated crack is situated symmetrically between the said attachment points.

26. Apparatus according to any one of claims 18 to 25, in which the said gauge (10) is shaped symmetrically about a line through the said initiated crack.

27. Apparatus according to any one of claims 18 to 26, comprising a gauge having parallel, endwise-disposed edges, one of which contains said initiated crack.

EP 0 452 573 B1

28. Apparatus according to claim 27, in which said gauge has edges connecting said parallel edges which taper with respect to the initiated crack-containing edge.

29. Apparatus according to any one of claims 18 to 28, in which the gauge has at least one indicated position corresponding to a stage of crack growth.

30. Apparatus according to claim 29, in which such indicated position is visibly marked.

31. Apparatus according to claim 29 or claim 30, in which said indicated position is a position at which sensor means attached to the gauge give a predetermined output representative of information related to the fatigue loading.

32. Apparatus according to any one of claims 18 to 31, comprising more than one initiated crack, giving multiple positions at which cracks may grow.

33. Apparatus according to any one of claims 18 to 32, comprising a tab-like gauge have a bridge-like form.

34. Apparatus according to any one of claims 18 to 33, comprising a gauge of plate or foil material lying parallel to an attachment surface of the detail.

35. Apparatus according to any one of claims 18 to 34, comprising a gauge of plate or foil material projecting perpendicularly from or inclined to an attachment surface of the detail.

36. Apparatus according to any one of claims 18 to 35, in which said gauge is attached to an intermediate member itself attached to the detail.

37. Apparatus according to any one of claims 18 to 36, in which said gauge involves a prestressing arrangement.

38. Apparatus according to claim 37, in which said prestressing arrangement comprises a split, tapered wedge prestressing arrangement.


**Patentansprüche**

1. Verfahren zur Überwachung der Ermüdung in einem Konstruktionsteil (11), das ermüdungserzeugenden Beanspruchungen unterworfen ist, von denen jeder Beanspruchungsbereich $S_i$ über die Betriebsgeschichte $n_i$-mal auftritt, dadurch gekennzeichnet, daß das Verfahren die Überwachung eines Meßrisses umfaßt, der einer gleichartigen Betriebsgeschichte wie das Teil (11) unterworfen ist, wobei der Riß (bei 14 oder 17) in einer Meßanordnung (10) eingeleitet wird, die ausgewählt wird durch

Auswahl einer erwarteten Grundlebensdauer des Teils in der Form

$$\sum_{max} c_i S_i^m n_i$$

entsprechend dem Teil angemessenen Kostruktionskriterien, und worin $c_i$ Faktoren sind, die die relativen Wirkungen auf die erwartete Lebensdauer verschiedener Beanspruchungs-Meßanordnungen kennzeichnen;

Auswahl einer Meßanordnungsfaktorfunktion, die festsetzt, wie sich der Meßriß unter den Beanspruchungen vergrößert, Anpassen des Schwellenwertverhaltens in der Meßanordnung an die Ermüdungsgrenze in der Struktur, und Begründen einer Meßanordnungskonstruktion, die diese Meßanordnungsfaktorfunktion hat;

Auswahl von Meßanordnungsmaterial und anderen Parametern, mit denen die Meßanordnung ausgeführt wird, so daß der Riß in der Meßanordnung zumindest für

$$\sum_{max} c_i S_i^m n_i$$

enthalten sein wird; und

Auswahl eines Grades an Vorspannung, die erforderlich ist für die Enfaltung der Meßanordnung auf dem Teil, so daß die Vergrößerung des Meßrisses

13

$$\sum_{max} c_i S_i^m n_i$$

entspricht, und Entfalten der Meßanordnung auf dem Teil mit dieser Vorspannung.

2. Verfahren nach Anspruch 1, in welchem alle $c_i$ gleich sind.

3. Verfahren nach Anspruch 2, in welchem $c_i$ Faktoren sind, die die relativen Wirkungen auf die erwartete Lebensdauer bei verschiedenen Beanspruchungsbereichen kennzeichnen.

4. Verfahren nach Anspruch 3, in welchem $c_i$ entsprechend einem modifizierten Palmgren-MinerLinearschaden-Summierungsgesetz

$$\Sigma \frac{c_i n_i}{c_0 N_i} = 1$$

ausgewählt werden, worin $c_0$ der Konstantamplituden-"Paris-Gesetz"-Koeffizent und $N_i$ die maximalen Zahlen von aufrechterhaltbaren Zyklen für die Beanspruchungspegel $S_i$ sind.

5. Verfahren nach einem der Ansprüche 1 bis 4, in welchem der Meßriß in einem Anhang des Teils ist.

6. Verfahren nach Anspruch 5, in welchem der Anhang die Form einer schlaufenartigen Meßanordnung hat.

7. Verfahren nach Anspruch 5 oder 6, in welchem der Anhang einen Abstand voneinander aufweisende Befestigungspunkte hat und der Meßriß relativ zu diesen Punkten eingeleitet wird, so daß eine relative Versetzung dieser Punkte Beanspruchungen an der Stelle des eingeleiteten Risses ausübt, durch welche eine Vergrößerung des Risses bewirkt wird.

8. Verfahren nach einem der Ansprüche 5 bis 7, in welchem die Meßanordnungsfaktorfunktion ausgewählt wird durch Auswahl der Form des Anhanges, um eine vorbestimmte gesteuerte Beziehung zwischen dem Beanspruchungsintensitätsfaktor am Riß im Anhang und der im Teil, an dem der Anhang befestigt ist, ausgeübten Beanspruchung vorzusehen.

9. Verfahren nach einem der Ansprüche 5 bis 8, in welchem der Anhang so gestaltet ist, daß die Länge des Risses den summierten Ermüdungsschaden des Teils und das Verhältnis der verbrauchten Ermüdungslebensdauer anzeigt.

10. Verfahren nach einem der Ansprüche 1 bis 4, in welchem der Meßriß integral in einem Teil der zu überwachenden Struktur vorgesehen ist.

11. Verfahren nach Anspruch 10, in welchem das Element mit einem rißhemmenden Loch oder Schlitz versehen ist, um das Wachsen des Risses zu begrenzen und das Teil gegen ein Ermüdungsversagen zu schützen.

12. Verfahren nach einem der Ansprüche 1 bis 11, in welchem ein Rißanziehungsmittel wie ein Loch oder Schlitz vorgesehen ist, zu welchem der Riß von dem eingeleiteten Riß aus wächst.

13. Verfahren nach einem der Ansprüche 1 bis 12, in welchem die Vergrößerung des Risses in Interval- len während der Betriebslebensdauer der Struktur untersucht wird.

14. Verfahren nach Anspruch 13, in welchem die Untersuchung visuell ist.

15. Verfahren nach einem der Ansprüche 1 bis 14, in welchem die Vergrößerung des Risses kontinuierlich während der Betriebslebensdauer der Struktur überwacht wird.

16. Verfahren nach Anspruch 15, in welchem die Überwachung elektrisch, magnetisch oder akustisch durchgeführt wird.

17. Verfahren nach Anspruch 16, in welchem der elektrische Widerstand über den Rißbereich überwacht wird.

18. Gerät zum Überwachen der Ermüdung in einem Konstruktionsteil (11), das ermüdungserzeugenden Beanspruchungen ausgesetzt ist, von denen jeder Beanspruchungsbereich $S_i$ über die Betriebsgeschichte

des Teils $n_i$-mal auftritt, das eine Meßanordnung (10) aufweist, dadurch gekennzeichnet, daß die Meßanordnung (10) einen eingeleiteten Riß (bei 14 oder 17) hat, das Teil eine ausgewählte erwartete Grundlebensdauer in der Form

$$\sum_{max} c_i S_i^m n_i$$

hat, die Meßanordnung (10) eine Meßan- ordnungsfaktorfunktion hat und aus einem Material besteht und ausgewählte Parameter hat, so daß sich der Riß unter den Beanspruchungen vergrö- ßert und in der Meßanordnung zumindest für

$$\sum_{max} c_i S_i^m n_i$$

enthalten sein wird, und einen ausgewählten Grad von Vorspannung hat, so daß die Vergrößerung des Meßrisses

$$\sum_{max} c_i S_i^m n_i$$

entspricht.

19. Gerät nach Anspruch 18, in welchem alle $c_i$ gleich sind.

20. Gerät nach Anspruch 18, in welchem $c_i$ Faktoren sind, die die relativen Wirkungen auf die erwartete Lebensdauer bei verschiedenen Beanspruchungsbereichen kennzeichnen.

21. Gerät nach Anspruch 20, in welchem $c_i$ entsprechend einem modifizierten Palmgren-Miner-Linear- schaden-Summierungsgesetz

$$\Sigma \frac{c_i n_i}{c_0 N_i} = 1$$

ausgewählt werden, worin $c_0$ der Konstantamplituden-"Paris-Gesetz"-Koeffizent und $N_i$ die maxima- len Zahlen von aufrechterhaltbaren Zyklen für die Beanspruchungspegel $S_i$ sind.

22. Gerät nach einem der Ansprüche 18 bis 21, in welchem die Meßanordnungsfaktofunktion bestimmt ist durch die Meßanordnung (10), die so geformt ist, daß eine gesteuerte Beziehung zwischen dem Beanspruchungsintensitätsfaktor am Riß in der Meßanordnung (10) und der ausgeübten Beanspruchung in der Struktur, an der die Meßanordnung (10) befestigt ist, erhalten wird.

23. Gerät nach Anspruch 22, mit im Abstand voneinander angeordneten Befestigungspunkten, die an dem Teil angebracht sind.

24. Gerät nach Anspruch 23, in welchem die Meßanord- nung so geformt ist, daß eine vorbestimmte gesteuerte Geschwindigkeit der Rißvergrößerung entlang ihres Weges zwischen den Befestigungspunkten erhalten wird.

25. Gerät nach Anspruch 24, in welchem sich der eingeleitete Riß symmetrisch zwischen den Befestigungspunkten befindet.

26. Gerät nach einem der Ansprüche 18 bis 25, in welchem die Meßanordnung (10) symmetrisch zu einer Linie durch den eingeleiteten Riß geformt ist.

27. Gerät nach einem der Ansprüche 18 bis 26, welches eine Meßanordnung mit parallelen, endweise angeordneten Kanten aufweist, von denen eine den eingeleiteten Riß enthält.

28. Gerät nach Anspruch 27, in welchem die Meßanord- nung die parallelen Kanten verbindende Kanten hat, die in Bezug auf die den eingeleiteten Riß enthaltende Kante konisch verlaufen.

29. Gerät nach einem der Ansprüche 18 bis 28, in welchem die Meßanordnung zumindest eine angezeigte Position hat, die einer Stufe der Rißver- größerung entspricht.

30. Gerät nach Anspruch 29, in welchem solche angezeigte Position sichtbar markiert ist.

**31.** Gerät nach Anspruch 29 oder Anspruch 30, in welchem die angezeigte Position eine Position ist, an der an der Meßanordnung befestigte Sensormittel ein vorbestimmtes Ausgangssignal abgeben, das eine auf die Ermüdungsbelastung bezogene Information kennzeichnet.

**32.** Gerät nach einem der Ansprüche 18 bis 31, das mehr als einen eingeleiteten Riß aufweist, wodurch mehrere Positionen gegeben sind, an denen Risse wachsen können.

**33.** Gerät nach einem der Ansprüch 18 bis 32, welches eine schlaufenartige Meßanordnung mit einer brückenartigen Form aufweist.

**34.** Gerät nach einem der Ansprüche 18 bis 33, welches eine Meßanordnung aus Platten- oder Folien- material aufweist, das parallel zu einer Befestigungsfläche des Teils liegt.

**35.** Gerät nach einem der Ansprüche 18 bis 34, welches eine Meßanordnung aus Platten- oder Folienmaterial aufweist, das senkrecht von oder geneigt zu einer Befestigungsfläche des Teils vorsteht.

**36.** Gerät nach einem der Ansprüche 18 bis 35, in welchem die Meßanordnung an einem Zwischenglied befestigt ist, das selbst am Teil befestigt ist.

**37.** Gerät nach einem der Ansprüche 18 bis 36, in welchem die Meßanordnung eine Vorspannvorrichtung enthält.

**38.** Gerät nach Anspruch 37, in welchem die Vorspann- vorrichtung eine geteilte, sich keilförmig verjüngende Vorspannvorrichtung aufweist.

## Revendications

**1.** Procédé de contrôle de fatigue dans un élément (11) de structure soumis à des contraintes capables de produire une fatigue, chaque plage de contraintes $S_i$ apparaissant $n_i$ fois au cours de l'évolution antérieure de l'élément, caractérisé en ce que le procédé comprend le contrôle d'une fissure de jauge soumise à une même évolution temporelle que l'élément (11), la fissure (en 14 ou 17) étant amorcée dans une jauge (10) sélectionnée par
- sélection d'une durée nominale de base de l'élément de la forme $\Sigma_{max} c_i S_i^m n_i$ en fonction de critères nominaux convenant à l'élément, $c_i$ étant des facteurs représentatifs des effets relatifs sur la durée nominale de différentes jauges de contrainte,
- la sélection d'une fonction du facteur de jauge établissant comment la fissure de jauge grossit pendant l'application des contraintes, avec adaptation d'un comportement de seuil de la jauge à la limite de fatigue de la structure et établissement d'une configuration de jauge qui possède cette fonction du facteur de jauge,
- la sélection du matériau de la jauge et d'autres paramètres pour la réalisation de la jauge d'une manière telle que la fissure est contenue à l'intérieur de la jauge au moins pour $\Sigma_{max} c_i S_i^m n_i$, et
- la sélection d'un degré de contrainte préalable nécessaire pour le déploiement de la jauge sur l'élément afin que la croissance de la fissure de la jauge corresponde à $\Sigma_{max} c_i S_i^m n_i$, et le déploiement de la jauge sur l'élément avec cette amplitude de contrainte préalable.

**2.** Procédé selon la revendication 1, caractérisé en ce que les facteurs $c_i$ sont tous égaux.

**3.** Procédé selon la revendication 2, dans lequel les facteurs $c_i$ sont des facteurs qui représentent les effets relatifs sur la durée nominale des différentes plages de contraintes.

**4.** Procédé selon la revendication 3, dans lequel les facteurs $c_i$ sont sélectionnés d'après une loi modifiée de sommation linéaire de détérioration de Palmgren-Miner,

$$\Sigma(c_i n_i / c_o N_i) = 1$$

$c_o$ étant le coefficient d'amplitude constante de la "Loi de Paris" et $N_i$ étant les nombres maximaux de cycles qui peuvent être encaissés pour les niveaux de contraintes $S_i$.

**5.** Procédé selon l'une quelconque des revendications 1 à 4, dans lequel la fissure de jauge est formée dans un accessoire de l'élément.

**6.** Procédé selon la revendication 5, dans lequel l'accessoire est sous forme d'une jauge analogue à une patte.

**7.** Procédé selon la revendication 5 ou 6, dans lequel l'accessoire a des points distants de fixation, et la fissure de jauge est amorcée par rapport à ces points de manière que le déplacement relatif de ces points provoque l'application de forces à l'emplacement de la fissure amorcée d'une manière qui provoque un grossissement de la fissure à partir de son amorce.

**8.** Procédé selon l'une quelconque des revendications 5 à 7, dans lequel la fonction du facteur de jauge est sélectionnée par sélection de la configuration de l'accessoire de manière qu'une relation réglée prédéterminée soit obtenue entre le facteur d'intensité de contrainte au niveau de la fissure de l'accessoire et la contrainte appliquée à l'élément auquel est fixé l'accessoire.

**9.** Procédé selon l'une quelconque des revendications 5 à 8, dans lequel l'accessoire est réalisé afin que la longueur de la fissure indique la détérioration cumulée par fatigue de l'élément et la proportion de la durée nominale de résistance à la fatigue qui est déjà écoulée.

**10.** Procédé selon l'une quelconque des revendications 1 à 4, dans lequel la fissure de jauge est formée afin qu'elle soit intégrée à un élément de la structure à contrôler.

**11.** Procédé selon la revendication 10, dans lequel l'élément a une fente ou un trou d'arrêt de fissure destiné à limiter la croissance de la fissure et à protéger l'élément de la structure contre la détérioration par la fatigue.

**12.** Procédé selon l'une quelconque des revendications 1 à 11, dans lequel un organe attracteur de fissure, tel qu'un trou ou une fente, est placé de manière que la fissure grossisse vers cet organe depuis l'amorce de fissure.

**13.** Procédé selon l'une quelconque des revendications 1 à 12, dans lequel la croissance de la fissure est inspectée à certains intervalles pendant la durée de service de la structure.

**14.** Procédé selon la revendication 13, dans lequel l'inspection est visuelle.

**15.** Procédé selon l'une quelconque des revendications 1 à 14, dans lequel la croissance de la fissure est contrôlée de façon continue pendant la durée de service de la structure.

**16.** Procédé selon la revendication 15, dans lequel le contrôle est réalisé électriquement, magnétiquement ou acoustiquement.

**17.** Procédé selon la revendication 16, dans lequel la résistance électrique est contrôlée dans la région de la fissure.

**18.** Appareil de contrôle de fatigue dans un élément (11) d'une structure soumise à des contraintes capables de produire une fatigue, chaque plage de contraintes $S_i$ se produisant $n_i$ fois pendant l'évolution temporelle de l'élément de la structure, l'appareil comprenant une jauge (10) et étant caractérisé en ce que la jauge (10) a une fissure amorcée (en 14 ou 17), l'élément de la structure ayant une durée nominale fondamentale choisie sous la forme $\Sigma_{max} c_i S_i^m n_i$, la jauge (10) ayant une fonction du facteur de jauge et étant formée avec un matériau et des paramètres choisis afin que la fissure grossisse sous l'action des contraintes et soit contenue à l'intérieur de la jauge au moins pour $\Sigma_{max} c_i S_i^m n_i$, et ayant un degré sélectionné de contrainte préalable afin que la croissance de la fissure de la jauge corresponde à $\Sigma_{max} c_i S_i^m n_i$.

**19.** Appareil selon la revendication 18, dans lequel les facteurs $c_i$ sont tous égaux.

**20.** Appareil selon la revendication 18, dans lequel les facteurs $c_i$ sont des facteurs qui représentent les effets relatifs de la durée nominale des différentes plages de contraintes.

**21.** Appareil selon la revendication 20, dans lequel les facteurs $c_i$ sont sélectionnés d'après une loi modifiée de sommation linéaire de détérioration de Palmgren-Miner,
$$\Sigma(c_i n_i / c_o N_i) = 1$$
$c_o$ étant le coefficient d'amplitude constante de la "Loi de Paris" et $N_i$ étant les nombres maximaux de cycles qui peuvent être encaissés pour les niveaux de contraintes $S_i$.

22. Appareil selon l'une quelconque des revendications 18 à 21, dans lequel la fonction du facteur de jauge (10) est déterminée par la configuration de la jauge qui donne une relation réglée entre le facteur d'intensité de la contrainte à la fissure dans la jauge (10) et la contrainte appliquée à la structure à laquelle est fixée la jauge (10).

23. Appareil selon la revendication 22, ayant des points distants de fixation à l'élément de la structure.

24. Appareil selon la revendication 23, dans lequel la jauge a une configuration donnant une vitesse réglée prédéterminée de croissance de la fissure le long de son trajet entre les points de fixation.

25. Appareil selon la revendication 24, dans lequel la fissure amorcée est placée symétriquement entre les points de fixation.

26. Appareil selon l'une quelconque des revendications 18 à 25, dans lequel ladite jauge (10) a une configuration symétrique par rapport à un axe passant par la fissure amorcée.

27. Appareil selon l'une quelconque des revendications 18 à 26, comprenant une jauge ayant des bords parallèles et disposés en bout, l'un des bords ayant la fissure amorcée.

28. Appareil selon la revendication 27, dans lequel la jauge a des bords qui relient les bords parallèles et qui se rapprochent progressivement vers le bord contenant la fissure amorcée.

29. Appareil selon l'une quelconque des revendications 18 à 28, dans lequel la jauge a au moins une position indiquée qui correspond à un stade de croissance de la fissure.

30. Appareil selon la revendication 29, dans lequel la position indiquée est marquée de manière visible.

31. Appareil selon la revendication 29 ou 30, dans lequel la position indiquée est une position dans laquelle un dispositif capteur fixé à la jauge donne un signal prédéterminé de sortie représentatif d'une information liée aux forces de fatigue.

32. Appareil selon l'une quelconque des revendications 18 à 31, comprenant plusieurs fissures amorcées, donnant plusieurs positions auxquelles les fissures peuvent grossir.

33. Appareil selon l'une quelconque des revendications 18 à 32, comprenant une jauge en forme de patte ayant une configuration en pont.

34. Appareil selon l'une quelconque des revendications 18 à 33, comprenant une jauge formée d'une matière en feuille ou plaque disposée parallèlement à une surface de fixation de l'élément de structure.

35. Appareil selon l'une quelconque des revendications 18 à 34, comprenant une jauge formée d'une matière en feuille ou plaque dépassant perpendiculairement d'une surface de fixation de l'élément de structure ou inclinée vers une telle surface.

36. Appareil selon l'une quelconque des revendications 18 à 35, dans lequel la jauge est fixée à un organe intermédiaire lui-même fixé à l'élément de structure.

37. Appareil selon l'une quelconque des revendications 18 à 36, dans lequel la jauge a une disposition assurant une mise sous contrainte préalable.

38. Appareil selon la revendication 37, dans lequel la disposition de mise sous contrainte préalable comporte un ensemble de mise sous contrainte préalable à coin fendu.

FIG.1

FIG. 2

FIG.3

FIG.4

FIG.5

61

62

63

FIG.6

71 72 73

72

72

72

FIG.7

83 82

81

FIG.8

91

.75 .5 .25

.25 .5 .75

FIG.9

103 102 101

101

FIG.10

↓ II

113   114   113

111

112

115

**FIG.11**

111   117   112

**FIG.12**

114
113   112   113   113   114   112   113   113   114   112   119   114   112   119   114   112

118                118

1                50%
131              2
2
3                30%              113              113   113

151

**FIG.13**      **FIG.14**      **FIG.15**      **FIG.16**      **FIG.17**

112   112   112   112   112   181   182   183

▷

**FIG.18**

192   191 113   114   113 112
111
193       193

**FIG.19**

FIG.20

FIG.21

FIG.22

23

FIG.23

EP 0 452 573 B1